# EUROPÄISCHE PATENTSCHRIFT

(11) **EP 1 844 241 B1**
(45) Veröffentlichungstag und Bekanntmachung des Hinweises auf die Patenterteilung: **14.04.2010**
(21) Anmeldenummer: 05808244.7
(22) Anmeldetag: 08.11.2005
(51) Int. Cl.: F16B 5/02

(54) **VORRICHTUNG ZUM AUSGLEICH VON TOLERANZEN BEIM BEFESTIGEN EINES ANBAUKÖRPERS AN EINEM GRUNDKÖRPER**
DEVICE FOR ADJUSTING TOLERANCES WHEN FASTENING AN ADD-ON TO A BASE
DISPOSITIF POUR COMPENSER DES TOLERANCES LORS DE LA FIXATION D'UN CORPS RAPPORTE SUR UN CORPS DE BASE

(30) Priorität: 21.01.2005 DE 102005002881
(43) Veröffentlichungstag der Anmeldung: 17.10.2007
(73) Patentinhaber: A. RAYMOND ET CIE, 38000 Grenoble (FR)
(72) Erfinder: GOMBERT, Stéphane, F-38640 Claix (FR); MOUCHET, Steve, F-38000 Grenoble (FR)
(74) Vertreter: Rüttgers, Joachim
(86) Internationale Anmeldenummer: PCT/EP2005/011916
(87) Internationale Veröffentlichungsnummer: WO 2006/076937

(56) Entgegenhaltungen:
- DE-U1- 20 119 112
- US-A- 5 429 467
- US-A1- 2002 029 652

## Beschreibung

Die Erfindung betrifft eine Vorrichtung gemäß dem Oberbegriff des Patentanspruches 1.

Eine derartige Vorrichtung ist aus DE 201 19 112 U1 bekannt. Bei der vorbekannten Vorrichtung ist ein längliches Halteteil vorhanden, das mit einem in Einführrichtung eines als Schraube mit einem Außengewinde ausgebildeten Verbindungsteiles in einem vorderen Endabschnitt mit einem Grundkörper verbindbar ist. Das Halteteil verfügt über ein Innengewinde, das mit einem Außengewinde einer länglichen Ausgleichsbuchse zusammenwirkt. Die Ausgleichsbuchse wiederum verfügt ebenfalls über ein in einem Kanal ausgebildeten Innengewinde, in die das Verbindungsteil einschraubbar ist. Durch Herausschrauben der Ausgleichsbuchse aus dem Halteteil bis zum Anschlag an einem Anbaukörper ist ein Toleranzausgleich für einen variierenden Abstand zwischen dem Grundkörper und dem Anbaukörper geschaffen. Nachteilig bei dieser Vorrichtung ist jedoch, dass es verhältnismäßig aufwändig ist, die Ausgleichsbuchse aus dem Halteteil heraus zu drehen, und dass lediglich ein Toleranzausgleich in Längsrichtung geschaffen ist.

Der Erfindung liegt die Aufgabe zugrunde, eine Vorrichtung der eingangs genannten Art anzugeben, die sich bei sehr einfacher Montage durch besonders ausgeprägte Toleranzausgleichseigenschaften auszeichnet.

Diese Aufgabe wird bei einer Vorrichtung der eingangs genannten Art erfindungsgemäß mit den kennzeichnenden Merkmalen des Patentanspruches 1 gelöst.

Dadurch, dass die Ausgleichsbuchse frei in dem Halteteil verschiebbar, der Kanal in Querrichtung ausgedehnt und ein in gewissen Grenzen flexibler Zwischenabschnitt vorhanden ist, ergibt sich eine sehr einfache und schnelle Montage sowie ein Toleranzausgleich neben der Längsrichtung auch in Querrichtung sowie gegenüber Verkippungen.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein erstes Ausführungs- beispiel einer erfindungsgemäßen Vorrichtung mit einer in ein Halteteil eingefügten und mit zwei Randbünden ausge- bildeten Ausgleichsbuchse,
- Fig. 2: in einer perspektivischen Ansicht ein Halteteil eines zweiten Ausführungsbeispieles einer erfindungsgemäßen Vorrich- tung und
- Fig. 3: in einer perspektivischen Ansicht eine mit einem Randbund und Rastnasen ausgebildete Ausgleichsbuchse des zwei- ten Ausführungsbeispieles.

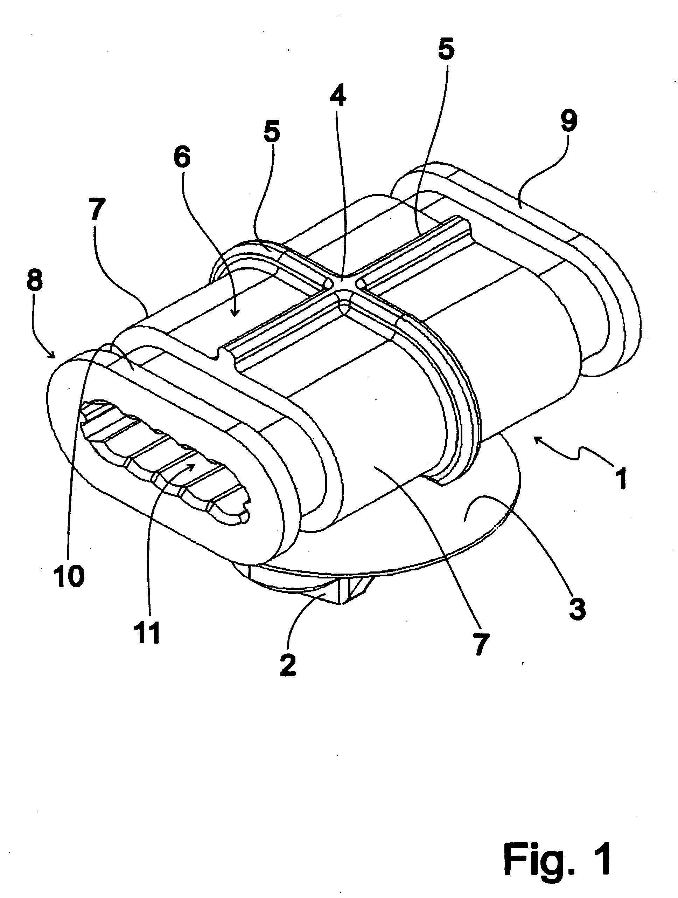

Fig. 1 zeigt in einer perspektivischen Ansicht ein erstes Ausführungsbeispiel einer erfindungsgemäßen Vorrichtung. Das Ausführungsbeispiel gemäß Fig. 1 verfügt über ein einstückiges Halteteil 1 aus einem Kunststoffmaterial, das mit einem in einem Befestigungsbereich angeordneten Befestigungsfuß 2 mit einem in Fig. 1 nicht dargestellten Grundkörper verbindbar ist, indem der Befestigungsfuß 2 in einer Ausnehmung des Grundkörpers einfügbar ist, wobei in eingefügter Anordnung ein Auflageteller 3 des Halteteiles 1 an dem Grundkörper anliegt.

Weiterhin ist das Halteteil 1 mit einer länglichen Lagerhülse 4 ausgebildet, die über einen bei dem ersten Ausführungsbeispiel im wesentlichen durch die Materialwahl relativ flexiblen, insbesondere biegsamen Zwischenabschnitt mit dem Befestigungsfuß 2 verbunden ist. Die Lagerhülse 4 weist an der Außenseite eine Anordnung von außenseitigen Verstärkungsrippen 5 auf, die beispielsweise wie bei dem dargestellten Ausführungsbeispiel in Längsrichtung sowie in Querrichtung verlaufen und die Lagerhülse 4 verstärken. Die Lagerhülse 4 ist mit zwei parallel miteinander ausgerichteten, rechteckförmigen Deckabschnitten 6 als Wandabschnitten ausgebildet, deren lange Seiten in Längsrichtung liegen und die randseitig über ebenfalls Wandabschnitte bildende halbkreisförmige Randabschnitte 7 miteinander verbunden sind. Die Deckabschnitte 6 und die Randabschnitte 7 sind bei dem ersten Ausführungsbeispiel mit glatten, flachen Oberflächen ausgebildet.

In die Lagerhülse 4 ist bei dem Ausführungsbeispiel gemäß Fig. 1 eine Ausgleichsbuchse 8 aus einem gegenüber dem Material des Halteteiles 1 steiferen Kunststoffmaterial eingefügt, wobei die Innenwand der Lagerhülse 4 die ebenfalls glatte Außenwand der Ausgleichsbuchse 8 umfänglich umschließt. Die Ausgleichsbuchse 8 weist in Längsrichtung der erfindungsgemäßen Vorrichtung gemäß Fig. 1 eine größere Abmessung als die Lagerhülse 4 auf, wobei an den beiden Enden der Ausgleichsbuchse 8 jeweils ein außen überstehender Randbund 9, 10 ausgebildet ist. Jeder Randbund 9, 10 bildet somit einen Anschlag bei Verschiebung der Ausgleichsbuchse 8 in Längsrichtung.

Die Ausgleichsbuchse 8 ist mit einem innenseitigen, sich in Längsrichtung erstreckenden Kanal 11 ausgebildet, der quer zu der Längsrichtung eine Ausdehnung aufweist, die größer als der Durchmesser eines zum Verbinden des in Fig. 1 nicht dargestellten Anbaukörpers mit dem Grundkörper in den Kanal 11 einführbaren Verbindungsteiles, vorzugsweise in Gestalt einer Schraube mit einem selbstschneidenden Gewinde, aufweist. Bei dem dargestellten Ausführungsbeispiel weist der Kanal 11 in der ausgedehnten Querrichtung eine gewellte Innenwand auf, so dass das Verbindungsteil beispielsweise mit einem Gewinde mit verhältnismäßig hoher Auszugskraft mit der Ausgleichsbuchse 8 in Eingriff kommt.

Die Herstellung des Halteteiles 1 und der Ausgleichsbuchse 8 gemäß dem ersten Ausführungsbeispiel erfolgt in einem sogenannten Zwei-Kompenten-Verfahren (2K-Verfahren) mit zwei verschiedenen, aneinander nicht haftenden Materialien.

Somit erfolgt bei der erfindungsgemäßen Vorrichtung durch die Längsverschiebbarkeit der Ausgleichsbuchse 8 in der Lagerhülse 4, die relative Flexibilität des Zwischenabschnittes sowie die verhältnismäßig große Ausdehnung des Kanales 11 in Querrichtung bei einer einfachen Montage von beiden Seiten der Ausgleichsbuchse 8 ein effizienter Toleranzausgleich in mehreren Richtungen.

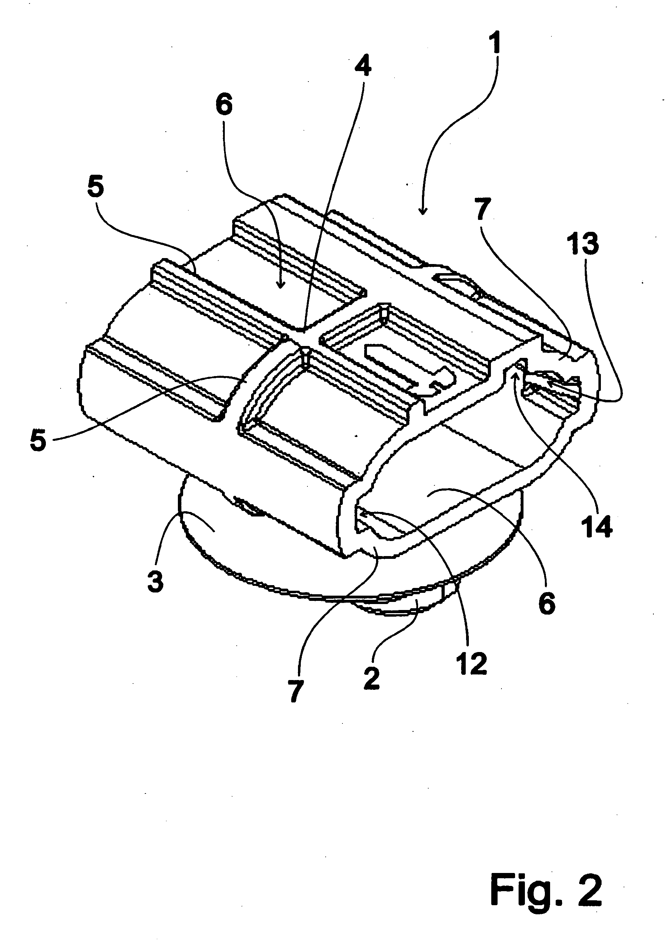

Fig. 2 zeigt in einer perspektivischen Ansicht ein Halteteil 1 eines zweiten Ausführungsbeispieles einer erfindungsgemäßen Vorrichtung, dessen Grundform im wesentlichen mit der des Halteteiles 1 des ersten Ausführungsbeispieles gemäß Fig. 1 übereinstimmt. Aus diesem Grund sind sich in Fig. 1 und Fig. 2 entsprechende Bauelemente mit den gleichen Bezugszeichen versehen und bei dem zweiten Ausführungsbeispiel nicht mehr näher erläutert.

Abweichend von dem Halteteil 1 gemäß Fig. 1 weist das Halteteil 1 gemäß Fig. 2 zwei sich in Längsrichtung erstreckende randseitige Randnuten 12, 13 auf, die in den Randabschnitten 7 ausgebildet sind und sich von einer Stirnseite in Längsrichtung nach innen erstrecken. Weiterhin ist in dem den Befestigungsfuß 2 gegenüberliegenden Deckabschnitt 6 eine sich ebenfalls in Längsrichtung erstreckende Decknut 14 ausgeformt, die sich über die gesamte Länge des Deckabschnittes 6 erstreckt und asymmetrisch angeordnet ist.

Bei dem Halteteil 1 gemäß Fig. 2 des zweiten Ausführungsbeispieles ist im wesentlichen die Geometrie der Anbindung der Lagerhülse 4 an den Befestigungsfuß 2, beispielsweise eine Materialverjüngung, für die Biegsamkeit der Lagerhülse 4 gegenüber dem Befestigungsfuß 2 verantwortlich.

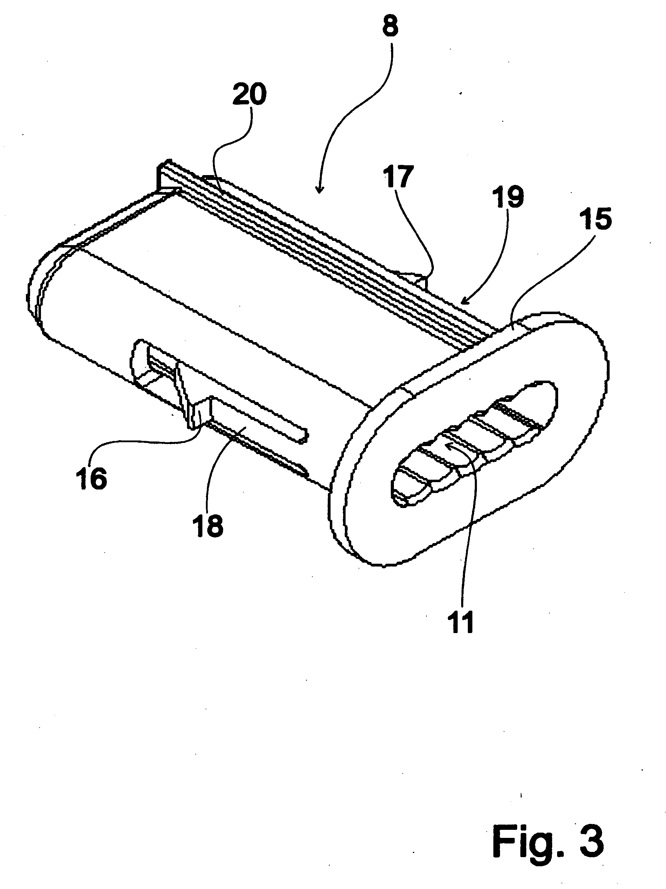

Fig. 3 zeigt in einer perspektivischen Ansicht eine Ausgleichsbuchse 8 des zweiten Ausführungsbeispieles, deren Grundform im wesentlichen mit der der Ausgleichsbuchse 8 bei dem ersten Ausführungsbeispiel gemäß Fig. 1 übereinstimmt. Bei dem zweiten Ausführungsbeispiel ist die Ausgleichsbuchse 8 im Verhältnis zu der Länge der Lagerhülse 4 kürzer als die Ausgleichsbuchse 8 bei dem ersten Ausführungsbeispiel ausgebildet. Weiterhin ist bei dem zweiten Ausführungsbeispiel das Material der Ausgleichsbuchse 8 das gleiche Material wie bei dem Halteteil 1.

Die Ausgleichsbuchse 8 verfügt über einen einzigen als Anschlag dienenden Randbund 15 und weist randseitig zwei über die Außenkontur vorstehende Rastnasen 16, 17 auf, die über federnde Zungen 18, 19 angebunden sind.

Weiterhin ist die Ausgleichsbuchse 8 bei dem zweiten Ausführungsbeispiel mit einer deckseitig angeordneten, überstehenden länglichen Führungsschiene 20 ausgebildet, die sich über die gesamte Länge der Ausgleichsbuchse 8 erstreckt und entsprechend der Decknut 14 ebenfalls asymmetrisch angeordnet ist.

In zusammengefügter Anordnung greifen die Rastnasen 16, 17 nach Einfügen in die Randnuten 12, 13 und Einfedern in in den Randabschnitten 7 ausgebildeten Vertiefungen ein, so dass neben dem Randbund 15 ein weiterer Anschlag, nämlich gegen Herausziehen der Ausgleichsbuchse 8 aus der Lagerhülse 4, gebildet ist.

## Patentansprüche

1. Vorrichtung zum Ausgleich von Toleranzen beim Befestigen eines Anbaukörpers an einem Grundkörper mit einem Halteteil (1), das mit dem Grundkörper verbindbar ist, und mit einer länglichen Ausgleichsbuchse (8), die mit dem Anbaukörper in Verbindung steht, gegenüber diesem verschiebbar ist und einen Kanal (11) zur Aufnahme eines mit dem Anbaukörper verbindbaren Verbindungsteiles aufweist, **dadurch gekennzeichnet, dass** das Halteteil (1) und die Ausgleichsbuchse (8) mit über einen Verschiebeweg glatten Wandabschnitten frei verschiebbar miteinander in Verbindung sind, dass der Kanal (11) der Ausgleichsbuchse (8) in einer Richtung quer zu der Längsrichtung eine größere Dimension als der Durchmesser eines Verbindungsteiles aufweist und dass das Halteteil (1) wenigstens in einem zwischen einem Befestigungsbereich (2) mit dem Grundkörper sowie einem Aufnahmebereich für die Ausgleichsbuchse (8) gelegenen Zwischenabschnitt biegsam ausgebildet ist.

2. Vorrichtung nach Anspruch 1, **dadurch gekennzeichnet, dass** der Kanal (11) in der ausgedehnten Querrichtung eine gewellte Innenwand aufweist.

3. Vorrichtung nach Anspruch 1 oder Anspruch 2, **dadurch gekennzeichnet, dass** das Halteteil (1) eine die Ausgleichsbuchse (8) umfänglich umschließende Lagerhülse (4) aufweist.

4. Vorrichtung nach Anspruch 3, **dadurch gekennzeichnet, dass** die Ausgleichsbuchse (8) an einem Ende einen nach außen überstehenden Randbund (10, 15) aufweist.

5. Vorrichtung nach Anspruch 4, **dadurch gekennzeichnet, dass** die Ausgleichsbuchse (8) an dem anderen Ende einen weiteren nach außen überstehenden Randbund (9) aufweist.

6. Vorrichtung nach Anspruch 3 oder Anspruch 4, **dadurch gekennzeichnet, dass** an der Ausgleichsbuchse (8) wenigstens eine nach außen vorstehende Rastnase (16, 17) ausgebildet ist, die mit einer an dem Halteteil (1) ausgebildeten Eingriffsstruktur die Relativbewegung des Halteteiles (1) und der Ausgleichsbuchse (8) in wenigstens einer Richtung begrenzend in Eingriff bringbar ist.

## Claims

1. Device for adjusting tolerances when fastening an add-on body to a base body, comprising a retaining part (1) which can be connected to the base body, and comprising an elongated adjusting bush (8) which is connected to the add-on body, is displaceable relative to it and has a channel (11) for receiving a connecting part which can be connected to the add-on body, **characterized in that** the retaining part (1) and the adjusting bush (8) are connected to one another in a freely displaceable manner by means of wall sections which are smooth over a displacement path, **in that** the channel (11) of the adjusting bush (8) has, in a direction transverse to the longitudinal direction, a larger dimension than the diameter of a connecting part, and **in that** the retaining part (1) is flexible at least in an intermediate section located between a fastening region (2) with the base body and a receiving region for the adjusting bush (8).

2. Device according to Claim 1, **characterized in that** the channel (11) has a corrugated inner wall in the extended transverse direction.

3. Device according to Claim 1 or Claim 2, **characterized in that** the retaining part (1) has a bearing bush (4) circumferentially enclosing the adjusting bush (8).

4. Device according to Claim 3, **characterized in that** the adjusting bush (8) has, at one end, an edge collar (10, 15) projecting outwards.

5. Device according to Claim 4, **characterized in that** the adjusting bush (8) has, at the other end, a further edge collar (9) projecting outwards.

6. Device according to Claim 3 or Claim 4, **characterized in that** at least one catch (16, 17) projecting outwards is formed on the adjusting bush (8), which catch (16, 17) can be caused to engage an engaging structure formed on the retaining part (1) so that the relative movement of the retaining part (1) and of the adjusting bush (9) is limited in at least one direction.

## Revendications

1. Dispositif permettant d'effectuer un rattrapage de jeu lors de la fixation d'un composant rapporté sur un élément principal, comprenant un organe de retenue (1) qui est destiné à être relié à l'élément principal et comprenant une douille de compensation de forme allongée (8), qui est raccordée au composant rapporté, qui peut être déplacée en translation par rapport à celui-ci et qui comporte un conduit de passage (11) destiné à l'insertion d'un organe de raccordement prévu pour être raccordé au composant rapporté, **caractérisé en ce que** l'organe de retenue (1) et la douille de compensation (8) sont raccordés l'un à l'autre, avec la possibilité de se coulisser librement au niveau de portions de parois lisses, sur une course de déplacement en translation, **en ce que** le conduit de passage (11) de la douille de compensation (8) présente, dans le sens transversal par rapport à la direction longitudinale, une dimension plus importante que le diamètre de l'organe de raccordement et **en ce que** l'organe de retenue (1) est capable de réagir élastiquement au moins au niveau d'une portion intermédiaire se situant entre la zone de fixation (2) sur l'élément principal et la zone de réception pour la douille de compensation (8).

2. Dispositif selon la revendication 1, **caractérisé en ce que** le conduit de passage (11) comporte, dans le sens transversal de son étendue, une paroi intérieure ondulée.

3. Dispositif selon la revendication 1 ou la revendication 2, **caractérisé en ce que** l'organe de retenue (1) comporte une douille de support (4) qui enserre sur sa périphérie la douille de compensation (8).

4. Dispositif selon la revendication 3, **caractérisé en ce que** la douille de compensation (8) est munie, au niveau d'une de ses extrémités, d'une collerette de rive (10, 15) faisant saillie vers l'extérieur.

5. Dispositif selon la revendication 4, **caractérisé en ce que** la douille de compensation (8) est munie, au niveau de son autre extrémité, d'une autre collerette de rive (9) faisant saillie vers l'extérieur.

6. Dispositif selon la revendication 3 ou la revendication 4, **caractérisé en ce qu'**il est prévu, sur la douille de compensation (8), au moins un ergot de mise en prise d'accrochage (16, 17) faisant saillie vers l'extérieur, qui est destiné à être engagé en prise d'encastrement avec une structure de mise en prise d'encastrement ménagée sur l'organe de retenue (1), limitant le déplacement relatif de l'organe de retenue (1) et de la douille de compensation (8) au moins dans une direction.
